Europäisches Patentamt

European Patent Office

Office européen des brevets

(11) Publication number: **0 510 736 A1**

## EUROPEAN PATENT APPLICATION

(21) Application number: **92200734.9**

(22) Date of filing: **13.03.92**

(51) Int. Cl.⁵: **F16D 66/02**

(30) Priority: **22.04.91 GB 9108579**

(43) Date of publication of application:
**28.10.92 Bulletin 92/44**

(84) Designated Contracting States:
**AT BE CH DE DK ES FR GR IT LI LU MC NL PT SE**

(71) Applicant: **GENERAL MOTORS FRANCE**
**56 à 68 Avenue Louis Roche**
**F-92231 Gennevilliers Paris(FR)**

(72) Inventor: **Valmir, Francis**
**99 rue de Malcouture**
**F-95100 Argenteuil(FR)**
Inventor: **Pantale, David**
**Batiment E, 51 Boulevard Foch**
**F-93800 Epinay sur Seine(FR)**

(74) Representative: **Denton, Michael John et al**
**Patent Section 1st Floor Gideon House 28**
**Chapel Street**
**Luton Bedfordshire LU1 2SE(GB)**

(54) Brake wear indicating device.

(57) A brake wear indicating device 1 for use in sensing the wear of a friction lining of a vehicle brake comprises a metal conductor 10 attached to an end cap 16 of insulating material and a metal sleeve 18. The metal sleeve 18 comprises a set of fingers 30 extending outwardly of the body 26 of the sleeve 18 and a set of projections 32 extending into the body 26. The projections 32 act to secure the end cap 16 to the sleeve 18, while the fingers 30 act to secure the end cap 16 to a backing plate 38 of a brake pad 40. When fitted to the backing plate 38, the positive connection prevents the brake wear indicating device 1 from coming loose when subjected to severe vibration and/or high temperatures.

Fig.1.

The present invention relates to a brake wear indicating device for use in sensing the wear of a friction lining of a vehicle brake.

Several types of brake wear indicating devices are known. One such type is described in FR-A-2,266,056 and comprises an insulated metal conductor which is cemented to an insulating end cap. The device is adapted to be fitted to the backing plate of a brake pad such that a portion of the metal conductor extends beyond the backing plate. Once the friction lining of the brake pad has worn sufficiently, the brake rotor, on application of braking pressure, breaks the top surface of the end cap and comes into contact with the metal conductor. This causes a circuit to be completed through the rotor and the metal conductor which actuates a warning indicator.

A problem associated with some brake wear indicating devices is that the device can come loose from the backing plate of the brake pad, in which event, the circuit through the rotor and the metal conductor is never completed, resulting in the failure to warn the driver that the friction lining has become worn. This can be the case particularly when the brake wear indicating device is subjected to severe vibration and/or high temperatures.

The present invention seeks to provide an improved brake wear indicating device.

Accordingly, an aspect of the present invention provides a brake wear indicating device for use in sensing the wear of a friction lining of a vehicle brake as specified in claim 1. The sleeve may be much stronger than the end cap, particularly when subjected to severe vibration and/or high temperatures, and can thus provide an improved connection between the brake wear indicating device and the backing plate.

In order to avoid any confusion, the front surface of the backing plate is defined as the surface to which the friction lining is attached.

Preferably, the sleeve comprises one or more protrusions adapted to engage the rear surface of the backing plate to secure the brake wear indicating device to the brake pad or brake shoe.

In an embodiment, the or each protrusion is a resiliently deformable finger adapted to engage the rear surface of the backing plate in a snap fit. In this manner, the or each finger can be readily deformed to slide the device through an aperture in the backing plate, and rigid in the opposite direction to prevent the device sliding forwardly out of the aperture.

Advantageously, the sleeve comprises a shoulder adapted to abut the enlarged head of the end cap and the front surface of the backing plate.

The sleeve may comprise one or more projections adapted to secure the end cap thereto.

Thus, the sleeve may comprise means for securing it to the end cap and also to the backing plate.

The end cap may encapsulate and seal the first end of the metal conductor. The encapsulated and sealed end is the end used to detect wear of the friction lining, and thus will be prevented from being electrically shorted until the rotor or drum breaks the insulation, that is once there has been the desired amount of wear of the friction lining.

The sleeve is preferably made substantially of metal.

An embodiment of the present invention is described below, by way of illustration only, with reference to the accompanying drawings, in which:

Figure 1 shows in partial cross-section an embodiment of brake wear indicating device fitted to a backing plate of a brake pad;

Figure 2a is a plan view of a metal sleeve of the brake wear indicating device of Figure 1, with part of a shoulder of the sleeve cut away;

Figure 2b is a cross-sectional side elevational view of the metal sleeve of Figure 2a; and

Figure 3 shows a perspective view of the brake wear indicating device of Figure 1 during fitting thereof to the backing plate.

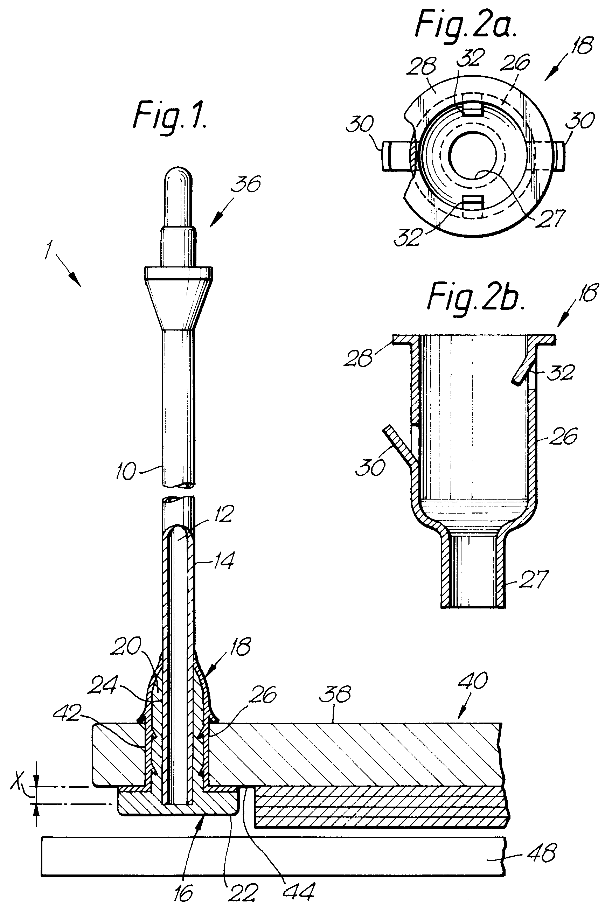

Referring to Figure 1, an embodiment of brake wear indicating device for use with a disc brake is shown. It will be apparent that the brake wear indicating device could also be used with a brake shoe for a drum brake.

The brake wear indicating device 1 shown comprises an insulated metal conductor 10, which in this case is a flexible electric wire 12 covered with an insulating sheath 14, and an end cap 16 made of electrically insulating and resiliently flexible material, such as polyphenylene sulphide or a liquid crystal polymer or polyether ether ketone or any other suitable material. The brake wear indicating device also comprises a metal sleeve 18 which fits around the end cap 16 and is secured thereto. Any suitable material may be used for the sleeve 18, for example iron, aluminium, brass, or a material other than metal, such as ceramics.

The end cap 16 is formed of a tubular shank 20 and an enlarged head 22 of substantially circular longitudinal cross-section. As can be seen in Figure 1, the end cap 16 is substantially T-shaped in radial cross-section.

A bore 24 passes through the shank 20 and part of the enlarged head 22. In the embodiment shown, the bore extends through about 50 percent of the depth of the enlarged head 22, which ensures that a when the enlarged head 22 is worn by the brake rotor, a sufficient amount of it remains intact to prevent the end cap 16 from coming loose from its mounting and from failing to complete the required electrical circuit.

The metal conductor 10 is fixed in the bore 24 of the end cap 16 by adhesive, by moulding the end cap around the wire, or by any other suitable method. The other end of the metal conductor 10 is provided with a connector 36 for connecting the brake wear indicating device 1 to suitable warning circuitry (not shown). Such warning circuitry is well known in the art so will not be described in detail here.

As can be seen better in Figures 2a and 2b, the metal sleeve 18 is formed of a tubular body element 26 and a shoulder 28. The body element 26 is shaped to correspond substantially to the outer shape of the end cap 16 and comprises a main portion which in use receives the shank 20 of the end cap 16 and a collar 27 of reduced cross-sectional diameter adapted to be fitted around the insulated metal conductor 10.

Provided on the body element 26 is a set of outwardly extending protrusions, which in this embodiment are in the form of resiliently deformable fingers 30 (only one finger 30 being shown in Figure 2b). Each finger 30 is formed by making a U-shaped cut in the body element 26 to form a finger having its free end directed towards the shoulder 28, and bending the finger 30 at its base. The angle to which each finger 30 is bent is chosen so as to enable it to be resiliently deformed towards the body element 26 and then to make a snap fit in an aperture in a backing plate, as is described below.

A set of inwardly extending projections 32 (only one projection 32 being shown in Figure 2b) is also provided on the body element 26. In this embodiment, each projection 30 is formed in a similar manner to the fingers 30, by making a U-shaped cut in the body element 26 to form an element having its free end directed away from the shoulder 28, and bending the element at its base into the body element, thereby forming a projection 32 which projects into the body element 26. In use, the projections 32 extend into the shank 20 of the end cap 16 to secure the end cap 16 firmly in the metal sleeve 18, thereby ensuring that the end cap 16 can not come loose from the sleeve 18.

The shoulder 28 of the sleeve 18 extends to approximately the same lateral extent as the enlarged head 22 of the end cap 16, although this is not necessary.

The preferred way of assembling the brake wear indicating device 1 is, first, to fit an end of the insulated conductor 10 into the base 24 of the end cap 16 and to secure it thereto by adhesive, heat sealing, or in any other suitable manner. The sleeve 18 is then passed over the other, connector end of the conductor 10 and fitted and secured to the end cap 16. Finally, a suitable connector 36 is fitted and secured to the other end of the conductor 10.

The collar 27 of the body element 26 is crimped to the insulated metal conductor 10 to add strength to the connection between the sleeve 18 and the end cap 16, however, such crimping is not necessary.

Referring again to Figure 1, the body element 26 of the sleeve 18 and the shank 20 of the end cap 16 are received in an aperture 42 of a backing plate 38 of a brake pad 40. The end of the metal conductor 10 in the end cap 16 extends beyond the front surface 44 of the backing plate 38 by a distance X. This distance X represents the depth of the friction lining 46 at which the brake pad 40 should be replaced.

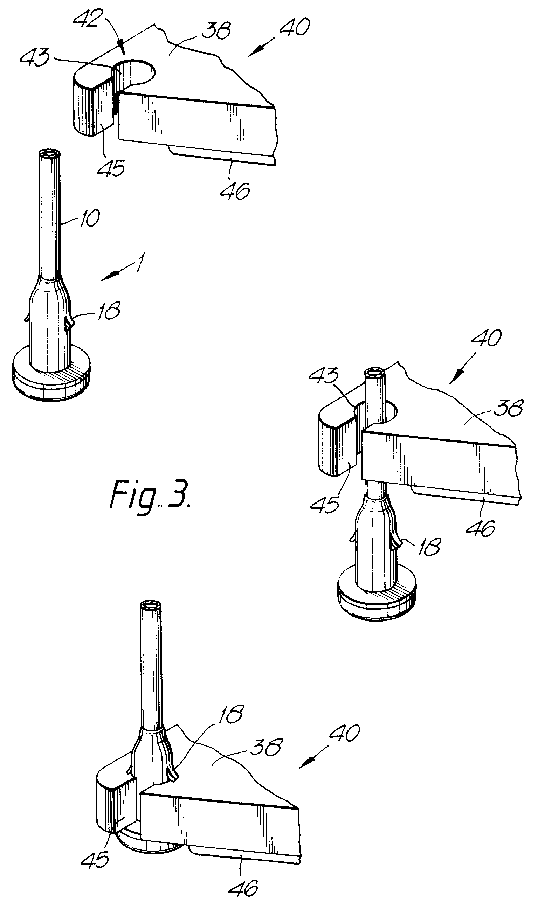

The aperture 42 in the backing plate 38 can be seen better in Figure 3, which shows how the brake wear indicating device 1 is fitted to the backing plate 38.

Referring to Figure 3, the aperture 42 can be thought of as being a necked channel in the side of the backing plate 38. It comprises a main, cylindrical portion 43 of substantially circular cross-section at the base of the channel, and having a diameter substantially the same as the outer diameter of the body element 26 of the sleeve 18. A neck 45, having a width smaller than the diameter of the cylindrical portion 43, is connected to the cylindrical portion 43 to form the channel. The width of the neck 45 is large enough to allow the passage of the insulated conductor 10 of the device 1 through it, but is small enough to prevent the passage of the body element 26 of the sleeve 18.

To fit the end cap 16 onto backing plate 38, the insulated conductor 10 is passed through the neck 45 into the cylindrical portion 43, and then the end cap 16 is pushed from the top of the enlarged head 22 into the cylindrical portion 43. As the fingers 30 come into contact with the backing plate 38, they are pushed into the body element 26 by the edge of the aperture 42. Once they have passed through the aperture 42, they will move outwardly again substantially to their original orientation (as shown in Figure 1), thereby to provide a snap fit. In this position, the fingers 30 abut the rear surface of the backing plate 38 to prevent the brake wear indicating device 1 from sliding in a forward direction out of the aperture 42.

The neck 45 not only provides an easy way to fit the end cap 16 into the aperture 42, but also acts to prevent the end cap 16 from coming loose from the backing plate 38 in such a way as to cause the device 1 to fail to complete the electrical circuit. This is particularly important if, for example, the fingers 30, or any other securing means provided instead of the fingers 30 (such as bosses on the body element 26, or adhesive), were to fail, enabling the end cap 16 to move forwardly towards the rotor (see Figure 1). In this circumstance, the neck 45 would prevent the end cap 16 from moving sideways out of the aperture 42 due to its restricted width. Thus, the only direction in which the end cap 16 could move would be forwardly, so as to come into contact with the rotor 48. As a result, the upper surface of the end cap 16 would be worn or broken by the rotor 48 to expose the end of the electrical wire 12 and complete the electrical circuit to activate the warning circuitry, albeit prematurely.

Furthermore, this design of aperture 42 allows easy installation of the device 1 in cases where the connector 36 is larger than the cylindrical portion 43 of the aperture.

During normal operation of the brake and the indicating device, the friction lining 46 of the brake pad 20 is worn by the brake rotor 56, such that the brake rotor 56 gradually moves closer to the backing plate 18 on braking. Once the friction lining has been worn sufficiently, the brake rotor 56 will, on braking, come into contact with the end cap 12 and break or wear out the top surface of the end cap, thereby coming into contact with the end of the metal conductor 10.

As soon as the brake rotor 56 contacts the metal conductor 10, a circuit through the rotor 56, the metal conductor 10 and part of the warning circuitry (not shown) is completed. This triggers the warning circuitry to generate a warning signal, which is typically a warning light, indicative of the fact that the friction lining is worn and that the brake pad must be replaced.

The brake pad 20 can then be replaced with a new brake pad having fitted to it a new brake wear indicating device 1.

The brake wear indicating device 1 can be removed from the backing plate, if necessary or desired, by urging the fingers 30 towards the body element 26 with any suitable tool. If the device 1 is not damaged, it can then be refitted to the same or a new brake pad.

## Claims

1. A brake wear indicating device for use in sensing the wear of a friction lining of a vehicle brake, comprising an electrical conductor (10); an end cap (16) of electrically insulating material which comprises a body portion (20) and and an enlarged head (22) lying along a substantially common axis, the enlarged head including an axial cross-section greater than the axial cross-section of the body portion and receiving a first end of the electrical conductor, the end cap being adapted to be positioned in an aperture (42) of a backing plate (38) of a brake pad or brake shoe (40) such that the first end of the electrical conductor extends beyond a front surface (44) of the backing plate; and a sleeve (18) adapted to be fitted over the end cap and to be disposed in use between the end cap and the aperture in the backing plate to secure the brake wear indicating device to the backing plate.

2. A brake wear indicating device according to claim 1, wherein the sleeve (18) comprises one or more protrusions (30) adapted in use to engage the rear surface of the backing plate to secure the brake wear indicating device to the brake pad or brake shoe.

3. A brake wear indicating device according to claim 2, wherein the or each protrusion (30) is a resiliently deformable finger adapted in use to engage the rear surface of the backing plate in a snap fit.

4. A brake wear indicating device according to any preceding claim, wherein the sleeve (18) comprises a shoulder (28) adapted to abut the enlarged head (22) of the end cap (16) and the front surface (44) of the backing plate.

5. A brake wear indicating device according to any preceding claim, wherein the sleeve (18) comprises one or more projections (32) adapted to secure the end cap thereto.

6. A brake wear indicating device according to any preceding claim, wherein the end cap (16) encapsulates and seals the first end of the metal conductor (10).

7. A brake wear indicating device according to any preceding claim, wherein the sleeve (18) is made substantially of metal.

Fig.1.

Fig.2a.

Fig.2b.

42 38 40
43
45
46

10

1
18

Fig. 3.

43 40
38
45 46
18

18
38 40
45
46

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 820 977 (ALFRED TEVES GMBH)<br>* column 2, line 30 - column 3, line 19; figures 1-3 * | 1 | F16D66/02 |
| A | | 2,3 | |
| A | US-A-4 280 594 (H. W. BAUM)<br>* column 3, line 65 - column 4, line 9; figure 2 * | 1 | |
| A | GB-A-2 030 635 (SUMITOMO ELECTRIC INDUSTRIES LTD.)<br>* page 1, line 38 - line 85; figures 1-4 * | 1 | |
| A | GB-A-2 054 071 (FORD MOTOR COMPANY LTD.)<br>* page 2, line 32 - line 39; figure 3 * | 1 | |

TECHNICAL FIELDS
SEARCHED (Int. Cl.5)

F16D

The present search report has been drawn up for all claims

| Place of search | Date of completion of the search | Examiner |
|---|---|---|
| THE HAGUE | 09 JULY 1992 | P. CHLOSTA |